# EUROPÄISCHE PATENTSCHRIFT

(11) **EP 0 893 668 B1**
(45) Veröffentlichungstag und Bekanntmachung des Hinweises auf die Patenterteilung: **19.01.2005**
(21) Anmeldenummer: 98202420.0
(22) Anmeldetag: 20.07.1998
(51) Int. Cl.: G01B 7/30, G01D 5/14, G01D 5/16

(54) **Winkelsensor**
Angle sensor
Capteur d'angle

(30) Priorität: 26.07.1997 DE 19732238
(43) Veröffentlichungstag der Anmeldung: 27.01.1999
(73) Patentinhaber: Philips Intellectual Property & Standards GmbH, 20099 Hamburg (DE); Koninklijke Philips Electronics N.V., 5621 BA Eindhoven (NL)
(72) Erfinder: Lochmann, Hans-Ulrich, 22335 Hamburg (DE); Petersen, August, 22335 Hamburg (DE)
(74) Vertreter: Volmer, Georg, Dipl.-Ing.

(56) Entgegenhaltungen:
- EP-A- 0 726 448
- WO-A-98/54541
- DE-A- 19 543 562
- US-A- 5 497 082

## Beschreibung

Die Erfindung betrifft einen Winkelsensor mit einem Magnetfeldsensorelement zur Messung eines von der Winkelposition eines relativ zum Winkelsensor um eine Drehachse drehbaren, mit einem Magneten versehenen Meßobjekts abhängigen Sensorsignals gemäß dem Oberbegriff des Anspruchs 1.

Aus der US 5,602,471 (PHD 94-022) ist ein Winkelsensor bekannt, bei dem das Magnetfeldsensorelement aus zwei berührungslos messenden und winkelversetzt zueinander angeordneten Sensoreinheiten aus jeweils vier zu einer Meßbrücke verschalteten magnetoresistiven Elementen besteht. Der bekannte Winkelsensor weist eine lineare Kennlinie (Sensorsignal in Abhängigkeit von der Winkelposition) in einem Winkelmeßbereich auf, der jedoch maximal 180° beträgt. Außerhalb des Winkelmeßbereichs verläuft die Kennlinie konstant. Bei ähnlichen bekannten Winkelsensoren wird mit geeigneten elektronischen Mitteln eine periodische Wiederholung der Kennlinie erreicht (mit einer Periode von maximal 180°). Eine eindeutige Bestimmung der Winkelposition bei über 180° hinausgehenden zu messenden Winkelpositionen ist jedoch bei den bekannten Winkelsensoren nicht möglich.

Aus der WO-A-98/54541 ist eine Anordnung zur berührungslosen Drehwinkelerfassung eines drehbaren Elements beschrieben, insbesondere zur berührungslosen Drehwinkelerfassung der Nockenwelle eines Motors. Diese Anordnung umfaßt einen Sensor, der zwei getrennte Sensorelemente aufweist, wobei ein Sensorelement nach dem magnetoresistiven und eines nach dem Hallprinzip arbeitet. Die beiden Sensorelemente sind gegeneinander um einen Winkel von 90° verdreht. Die beiden Sensorelemente werden einem Magnetfeld ausgesetzt, das mit Hilfe von Magneten erzeugt wird, die sich mit der Welle drehen. Mit dieser Anordnung ist es möglich, über einen Winkel von 360° zu messen.

In der DE-A-195 43 562 wird eine Anordnung zur berührungslosen Drehwinkelerfassung eines drehbaren Elements vorgeschlagen, bei der unter Auswertung von magnetisch beeinflußbaren Eigenschaften in einer Sensoranordnung, eine vom drehbaren Element erzeugte oder beeinflußte magnetische Feldstärke detektierbar und zur Ermittlung der Drehlage heranziehbar ist. Um auf einfache Weise auch die absolute Drehlage des drehbaren Elements zu erfassen, ist die Sensoranordnung aus wenigstens zwei Sensorelementen aufgebaut und derart dem drehbaren Element gegenüber angeordnet, daß die vom drehbaren Element ausgehenden Feldlinien in jeder Drehlage quer zu den von der Richtung eines Stromes in den Sensorelementen vorgegebenen Sensorstrukturen verlaufen. Mit verschiedenen elektronischen Auswerteeinrichtungen sind die Richtungskomponenten der Feldlinien zur Ermittlung der Drehlage auswertbar, indem die Phasenlage zwischen Eingangs- und Ausgangssignalen der jeweiligen Sensorelemente ausgewertet wird. Als Eingangssignale werden entweder sinus- oder rechteckförmige Wechselspannungen zugeführt oder Gleichspannungen.

Wie in der WO-A-98/54541 beschrieben, ist in den Winkelbereichen 0°, 180° und 360°, also jeweils an den Umschaltgrenzen, das Ergebnis der Winkelbestimmung bei einer Anordnung der vorstehend beschriebenen Art zweideutig. Bei einer reinen Winkelmessung ist es daher erforderlich, die Meßwerterfassung in diesen Bereichen zu unterdrücken. Wird eine derartige Anordnung zur berührungslosen Drehwinkelerfassung in Verbindung mit der Winkelbestimmung der Nockenwelle eines Motors eingesetzt, spielt gemäß den Ausführungen in der WO-A-98/54541 die Zweideutigkeit bei der Winkelerfassung an der Umschaltgrenze nur während der Anlaufphase des Motors eine Rolle. Werden weiterhin gemäß diesen Ausführungen die Umschaltgrenzen des Winkelsensors so festgelegt, daß sie in die oberen Totpunkte des Motors fallen, dann soll die Zweideutigkeit in der Praxis nicht mehr relevant sein, da ein Motor unter normalen Bedingungen nicht im oberen Totpunkt stehenbleibt und somit auch nicht aus dem oberen Totpunkt heraus anlaufen muß.

Nun gibt es einerseits Anwendungen für Winkelsensoren, bei denen eine Zweideutigkeit der genannten Art in keinem Winkelbereich zulässig ist. Andererseits kann bei der Drehwinkelerfassung in Verbindung mit der Winkelbestimmung der Nockenwelle eines Motors im Gegensatz zu den Ausführungen in der WO-A-98/54541 auch der Bereich des oberen Totpunktes eine Rolle spielen, da in diesem Bereich wichtige, durch die Nockenwelle gesteuerte Brenngasaustauschvorgänge im Motor stattfinden.

Die genannte Zweideutigkeit wird in der Praxis noch dadurch verstärkt, daß die Meßelemente nicht-ideal sind und einen Übergangsbereich aufweisen, in dem die Richtungsbestimmung des Magnetfeldes nicht eindeutig möglich ist.

Der Erfindung liegt deshalb die Aufgabe zugrunde, einen eingangs genannten Winkelsensor derart auszugestalten, daß eine eindeutige Winkelpositionsbestimmung auch unter den vorbeschriebenen, einschränkenden Bedingungen im gesamten Winkelmeßbereich möglich ist.

Diese Aufgabe wird erfindungsgemäß bei einem Winkelsensor der gattungsgemäßen Art durch die im kennzeichnenden Teil des Anspruchs 1 aufgeführten Merkmale gelöst.

Mit der Erfindung ist eine eindeutige Bestimmung der Winkelposition im gesamten Winkelmeßbereich bis 360° möglich, auch wenn die Meßelemente nicht-ideal sind und einen Übergangsbereich aufweisen, in dem die Richtungsbestimmung des Magnetfeldes nicht eindeutig möglich ist.

Bevorzugt sind die Meßelemente gemäß Anspruch 2 auf unterschiedlichen radialen, von der Drehachse ausgehenden Linien angeordnet, so daß mindestens ein Meßelement immer eine eindeutige Richtungsbestimmung des Magnetfeldes zuläßt. Alle Meßelemente können auch zusammen mit der Auswerteschaltung auf dem gemeinsamen Halbleiterbauelement angeordnet sein.

Das Richtungssignal enthält die Information, in welche Richtung das Magnetfeld zeigt, das das Meßelement durchsetzt. Da sich die Richtung des Magnetfeldes bei einer 180°-Drehung des mit dem Magneten versehenen Meßobjekts ändert, kann anhand des Richtungssignals entschieden werden, welchem Winkehneßbereich ein gemessenes Sensorsignal zuzuordnen ist. Dies erfolgt in der Auswerteschaltung, in der anhand des Sensorsignals dann die Winkelposition bestimmt wird. Der erfindungsgemäße Winkelsensor ermöglicht somit eine eindeutige Bestimmung der Winkelposition in einem größeren Winkelmeßbereich als bei den bekannten Winkelsensoren.

Die Ausgestaltung der Erfindung gemäß Anspruch 3 weist eine große Meßempfindlichkeit auf, und ein solches Magnetfeldsensorelement weist eine lineare Kennlinie in einem bestimmten Winkelmeßbereich auf.

Bevorzugt ist bei der Weiterbildung gemäß Anspruch 5 die Verwendung eines Hall-Elements, insbesondere eines als Schalter dienenden Hall-Elements (Switch-Hall-Sensor), das als Richtungssignal nur die Information liefert, ob das ihn durchsetzende Magnetfeld in einer ersten Richtung oder in der Gegenrichtung verläuft bzw. ob das ihn durchsetzende Magnetfeld eine wesentliche Magnetfeldkomponente in einer ersten Richtung oder in der Gegenrichtung enthält. Die Verwendung eines solchen Hall-Elements ist besonders günstig und die Auswertung des Richtungssignals sehr einfach.

Die Anordnung des Meßelements gemäß der Weiterbildung laut Anspruch 6 ist besonders vorteilhaft, da dabei die Richtung des Magnetfeldes am einfachsten zu bestimmen ist. Insbesondere ein Hall-Element eignet sich bei einer derartigen Ausgestaltung als Meßelement.

Besonders platzsparend und kostengünstig ist die Ausgestaltung gemäß Anspruch 7. Insbesondere sind das Meßelement und die Auswerteschaltung als gemeinsames Halbleiterbauelement ausgestaltet. Denkbar wäre auch noch die Integration des Magnetfeldsensorelements auf dem gemeinsamen Bauelement, das jedoch bevorzugt auf der Drehachse des Meßobjekts angeordnet ist, während das Meßelement und die Auswerteschaltung bevorzugt neben der Drehachse und damit in einem Abstand vom Magnetfeldsensorelement angeordnet sind.

Die Erfindung betrifft auch einen Stellungsgeber, insbesondere einen Lenkwinkelstellungsgeber zur Messung der Lenkwinkelstellung des Lenkrades in einem Fahrzeug oder einen Stellungsgeber zur Messung der Winkelstellung der Nockenwelle oder einer zugehörigen Hilfswelle in/an einem Fahrzeugmotor zur (variablen) Ventilsteuerung, mit einem erfindungsgemäßen Winkelsensor sowie ein Fahrzeug, in dem ein solcher Stellungsgeber eingebaut ist. Der erfindungsgemäße Winkelsensor kann auch zur Bestimmung der Winkelstellung der Achse eines Elektromotors, einer Turbine, eines Generators oder oder einer Windrose verwendet werden, allgemein überall da, wo Winkelstellungen zwischen 0° und 360° bestimmt werden sollen. Soll zusätzlich wie z.B. bei der Bestimmung der Winkelstellung eines Lenkrades die Winkelstellung in einem noch größeren Winkelbereich bestimmt werden, sind weitere Mittel vorzusehen, die beispielsweise die Anzahl der Umdrehungen ermitteln und speichern.

Die Erfindung wird nachfolgend anhand der Zeichnungen näher erläutert. Es zeigen:
- Fig. 1: eine Skizze mit einem Winkelsensor zur Bestimmung einer Winkelposition,
- Fig. 2: eine Draufsicht auf die Anordnung der einzelnen Elemente des Winkelsensors,
- Fig. 3: eine Detaildarstellung eines als Magnetfeldsensorelement verwendeten MR-Sensors,
- Fig. 4: verschiedene Signale bei dem Winkelsensor und
- Fig. 5: die erfindungsgemäße Anordnung der einzelnen Elemente bei einem Winkelsensor mit zwei Meßelementen.

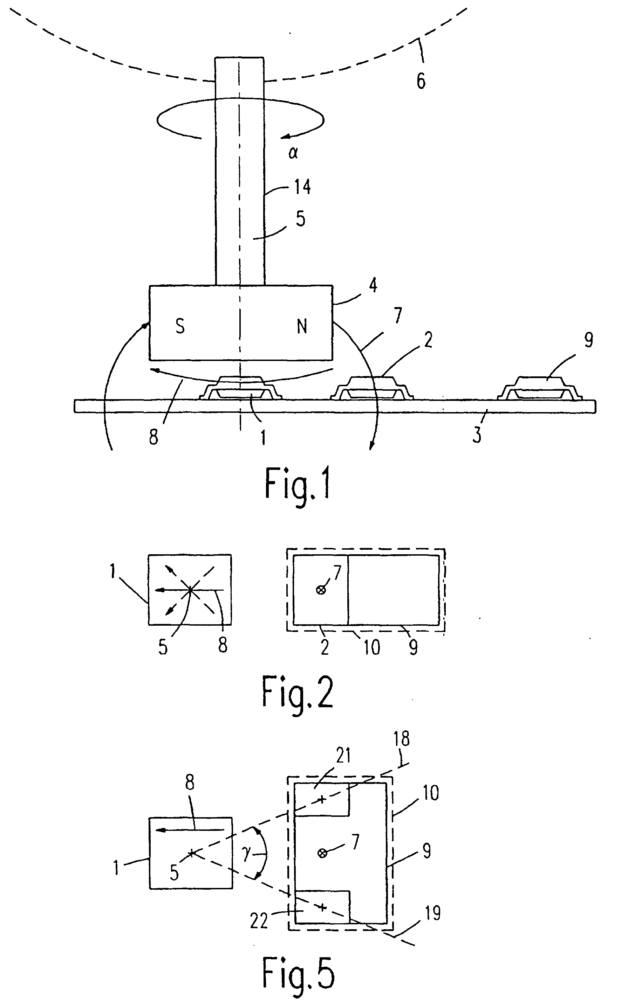

In Fig. 1 ist ein Winkelsensor mit einem Magnetfeldsensorelement 1, einem Meßelement 2 und einer Auswerteschaltung 9 gezeigt, wobei die genannten Elemente auf einer Leiterplatte 3 angeordnet sind. Das Magnetfeldsensorelement 1 ist eng benachbart zu einem Magneten 4 angeordnet, welcher über eine Welle 14 mit einem Meßobjekt 6, z.B. ein Lenkrad eines Fahrzeugs, fest verbunden ist. Der Magnet 4, der als flache runde Scheibe ausgebildet ist, ist rotationssymmetrisch zur Drehachse 5 angeordnet, um die das Meßobjekt 6 drehbar ist. Mit dem Winkelsensor soll die Winkelposition α bestimmt werden, in der sich das Meßobjekt 6 jeweils befindet. Das Magnetfeldsensorelement 1, für das hier ein magnetoresistiver Sensor (MR-Sensor) verwendet wird, ist dazu in geringem Abstand zu dem Magneten 4 und auf der Drehachse 5 angeordnet derart, daß das Magnetfeldsensorelement 1 im wesentlichen in zur Drehachse 5 senkrechter Richtung von einem Magnetfluß 8 des von dem Magneten 4 erzeugten Magnetfeldes durchsetzt ist. Die magnetoresistiven Elemente des Magnetfeldsensorelements 1 sind für ein Magnetfeld in zur Drehachse 5 senkrechter Richtung empfindlich, wobei sich die Größe des von dem MR-Sensor 1 gemessenen Sensorsignals U_{S} in Abhängigkeit vom Winkel α ändert.

Mit dem Magnetfeldsensorelement 1 allein kann jedoch nicht eindeutig die Winkelposition a von 0° bis 360° bestimmt werden, da dessen Kennlinie nur für einen Winkelmeßbereich von 180° eindeutig ist. Deshalb ist neben dem Magnetfeldsensorelement 1 das Meßelement 2, das hier ein Hall-Element ist, seitlich versetzt angeordnet, so daß es von einem im wesentlichen in zur Drehachse 5 parallel verlaufenden magnetischen Fluß 7 des von dem Magneten 4 erzeugten Magnetfeldes durchsetzt ist. Das Meßelement 2 ist derart angeordnet, daß es für ein in dieser Richtung verlaufendes Magnetfeld empfindlich ist, und liefert ein Richtungssignal U_{R}, das in einfachsten Fall nur die Information enthält, ob der ihn durchsetzende Magnetfluß 7 vom Meßobjekt 6 weg (also wie in der Figur gezeigt nach unten) gerichtet ist oder zum Meßobjekt 6 hin (in der Figur nach oben) gerichtet ist (in einer anderen nicht gezeigten Winkelposition α, bei der der Südpol S statt des Nordpols des Magneten 4 dem Meßelement 2 benachbart ist).

In Fig. 2 ist die Anordnung der Elemente des Winkelsensors in einer Draufsicht gezeigt. Zur Verdeutlichung ist auch die Richtung des das Magnetfeldsensorelement 1 durchsetzenden Magnetflusses 8 eingezeichnet, wobei gestrichelt die Richtung dieses Magnetfeldes bei einer anderen Winkelposition α angedeutet ist. Auch die Richtung des das Meßelement 2 durchsetzenden Magnetflusses 7 ist angedeutet. Das Meßelement 2 und die Auswerteschaltung 9 sind hier platzsparend als gemeinsames Halbleiterbauelement 10 ausgestaltet.

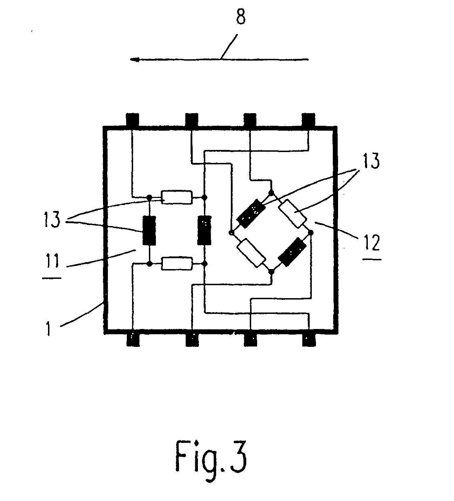

In Fig. 3 ist ein Teil einer Ausgestaltung des als Magnetfeldsensorelement verwendeten MR-Sensors 1 gezeigt. Dieser weist zwei Meßbrücken 11, 12 auf, die jeweils aus vier magnetoresistiven Elementen 13 bestehen, wobei die einzelnen magnetoresistiven Elemente 13 einer Meßbrücke 11, 12 jeweils im 90°-Winkel zueinander angeordnet sind. Die beiden Meßbrücken 11, 12 sind vorzugsweise, wie gezeigt, um 45° zueinander verdreht angeordnet. Der gezeigte MR-Sensor 1 ist empfindlich für ein in der Zeichenebene verlaufendes Magnetfeld, z.B. für ein Magnetfeld 8, und ist so angeordnet, daß die Drehachse 5 (siehe Fig. 1) senkrecht zur Zeichenebene und durch das Zentrum des MR-Sensors 1 verläuft. Die beiden Meßbrücken 11, 12 weisen jeweils eine sinusförmige periodische Kennlinie auf. Die Kennlinien werden mit geeigneten (nicht gezeigten) Schaltmitteln in eine in einem Winkelbereich bis maximal 180° lineare Kennlinie gewandelt. Die Elemente 13 der Meßbrücken 11,12 können wie in der US 5,602,471 gezeigt ineinander verschachtelt angeordnet sein. Hinsichtlich einer näheren Erläuterung der Funktionsweise eines solchen MR-Sensors wird auf den genannten Stand der Technik verwiesen.

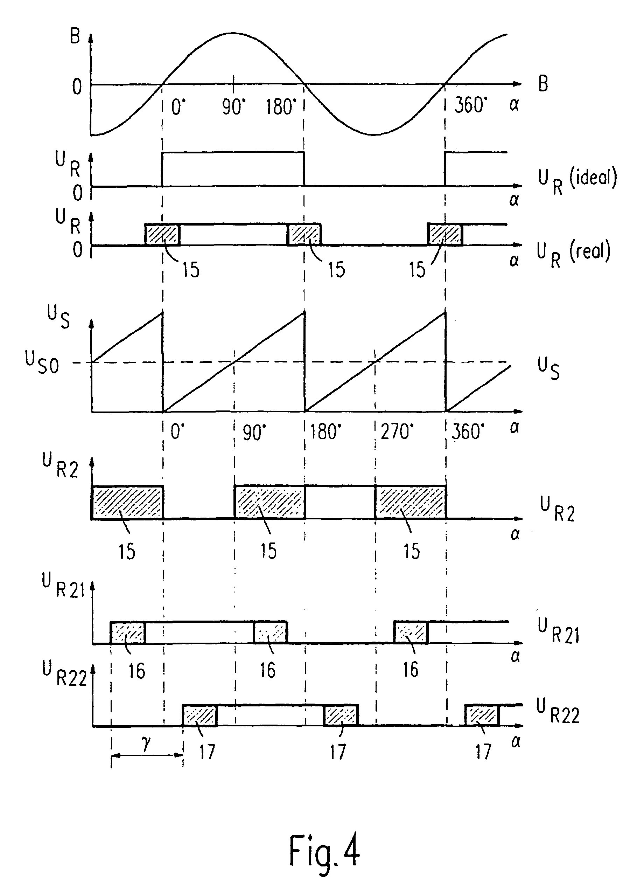

In Fig. 4 sind unterschiedliche Signalverläufe in Abhängigkeit von der Winkelposition a zur Verdeutlichung der Funktionsweise des Winkelsensors dargestellt. In der ersten Zeile ist der Verlauf des das Hall-Element 2 durchsetzenden magnetischen Flusses B gezeigt. Für α = 90° ist der Nordpol des Magneten 4 dem Hall-Element 2 am nächsten (dies ist die in Fig. 1 gezeigte Situation), und der magnetische Fluß B weist ein Maximum auf.

In der zweiten Zeile ist der Verlauf des Richtungssignals U_{R} eines idealen Hall-Elements 2 gezeigt. Bei den Nulldurchgängen des magnetischen Flusses B weist das Richtungssignal U_{R} einen Spannungssprung auf, so daß das Richtungssignal U_{R} die Information enthält, in welche Richtung das Magnetfeld beim Hall-Element 2 zeigt.

Das Richtungssignal U_{R} eines realen Hall-Elements weist dagegen den in der dritten Zeile gezeigten Verlauf auf, welches um einen Winkelbereich um die Nulldurchgänge des magnetischen Flusses herum Übergangsbereiche 15 aufweist, in denen eine eindeutige Bestimmung der Richtung des Magnetfeldes beim Hall-Element 2 nicht möglich ist. Je nach Stärke des Magnetfeldes des Magneten 4, nach Entfernung des Hall-Elements 2 zum Magneten 4 und nach der Art des Hall-Elements 2 ist die Breite dieses Übergangsbereiches 15 unterschiedlich groß. Es ist möglich, daß in diesem Übergangsbereich 15 der Spannungssprung an einer beliebigen Winkelposition α zufällig erfolgt oder daß die Meßspannung stetig ansteigt bzw. abfällt, so daß jedenfalls im Übergangsbereich 15 kein eindeutiger Verlauf des Richtungssignals U_{R} feststellbar ist.

Der Verlauf des Sensorsignals U_{S} eines MR-Sensors 1 ist in der vierten Zeile gezeigt. Diese Kennlinie wiederholt sich mit einer Periode von α = 180°. Um mit einem solchen MR-Element 1 und einem einzigen (realen) Hall-Element 2 wenigstens einen Winkelmeßbereich von 270° abdecken zu können, wird das Hall-Element 2, dessen Übergangsbereich 15 dann ≤ 90° sein muß, so angeordnet, daß die Übergangsbereiche 15 des Richtungssignals in einem solchen Winkelbereich des gewünschten Winkelmeßbereichs von 270° liegen, in dem die Kennlinie (das Sensorsignal U_{S}) eindeutig ist, also im Bereich zwischen α = 90° und α = 180°. In diesem Winkelbereich wird das Richtungssignal U_{R2} also nicht benötigt, nur in den Winkelbereichen zwischen 0° und 90° (dort liefert das Hall-Element 2 kein Signal) und zwischen 180° und 270° (dort liefert das Hall-Element 2 ein Signal) wird das Richtungssignal U_{R2} benötigt zur Entscheidung, in welchem Winkelbereich ein gemessenes Sensorsignal U_{S} liegt. Dies erfolgt mittels der Auswerteschaltung, der das gemessene Sensorsignal U_{S} und das Richtungssignal U_{R2} zugeführt werden:
Für U_{R2} = 0 und U_{S} < U_{S0} gilt: 0° ≤ α ≤ 90°.
Für U_{R2} ≠ 0 und U_{S} < U_{S0} gilt: 180° ≤ α ≤ 270°.
Für U_{S} > U_{S0} gilt (U_{R2} nicht benötigt): 90° ≤ α ≤ 180°.

Um die für diese Ausführung benötigte beschriebene Lage der Übergangsbereiche 15 des Hall-Elements 2 zu erreichen, ist das Hall-Element 2 an einer anderen Position angeordnet, nämlich auf einer radialen, von der Drehachse 5 ausgehenden Linie bei α = 45° (in Fig. 1 ist das Hall-Element 2 auf einer radialen Linie bei α = 90° gezeigt). Mit einer solchen Anordnung ist also eine Winkelpositionsbestimmung zwischen 0° und 270° eindeutig möglich. Damit das Meßobjekt 6 nicht eine darüber hinausgehende Winkelposition einnehmen kann, kann beispielsweise eine mechanische Begrenzung vorgesehen sein.

Soll der Winkelmeßbereich weiter vergrößert und gegebenenfalls bis auf 360° ausgedehnt werden, muß entweder ein Meßelement 2 mit kleineren Übergangsbereichen 15 verwendet werden, oder es wird erfindungsgemäß zusätzlich ein zweites Meßelement (z.B. ein zweites Hall-Element) verwendet. Eine solche Anordnung ist in Fig. 5 gezeigt. Dort sind zwei Hall-Elemente 21, 22 zusammen mit der Auswerteschaltung 9 auf dem Halbleiterbauelement 10 angeordnet, wobei deren radiale Lage um den Winkel γ verschoben ist, d.h. das erste Hall-Element 21 ist auf einer ersten radialen Linie 18 und das zweite Hall-Element 22 auf einer zweiten radialen Linie 19 angeordnet. Die zugehörigen Verläufe der Richtungssignale U_{R21} und U_{R22} sind in den letzten beiden Zeilen der Fig. 4 dargestellt. Aufgrund der Anordnung der Hall-Elemente 21, 22 auf unterschiedlichen radialen Linien 18, 19 liegen deren Übergangsbereiche 16,17 um den Winkel γ versetzt zueinander. Der Winkel γ ist dabei derart zu wählen, daß sich die Übergangsbereiche 16 und 17 in keinem Bereich des Winkels a überschneiden. Dadurch wird erreicht, daß mindestens immer ein Richtungssignal U_{R21}, U_{R22} einen eindeutigen Wert aufweist und damit eindeutig die Bestimmung zuläßt, in welchem Kennlinienbereich ein gemessenes Sensorsignal U_{S} liegt. Bei den gezeigten Signalverläufen wird beispielsweise das Richtungssignal U_{R21} für α = 0° bis 90° und α = 180° bis 270° zur Entscheidung herangezogen, während für die restlichen Winkelbereiche das Richtungssignal U_{R22} zur Bestimmung des Kennlinienbereichs herangezogen wird. Dies erfolgt wiederum in der Auswerteschaltung, der die genannten Signale zugeführt werden:
Für U_{R21} = 0 und U_{S} < U_{S0} gilt: 180° ≤ α ≤ 270°.
Für U_{R21} ≠ 0 und U_{S} < U_{S0} gilt: 0° ≤ α ≤ 90°.
Für U_{R22} = 0 und U_{S} > U_{S0} gilt: 270° ≤ α ≤ 360°.
Für U_{R22} ≠ 0 und U_{S} > U_{S0} gilt: 90° ≤ α ≤ 180°.

Bevorzugt ist γ = 90° gewählt, da bei einer solchen Anordnung der Abstand zwischen den Übergangsbereichen 16 und 17 maximal ist. Die Hall-Elemente 21, 22 sind außerdem bevorzugt um jeweils 45° gegenüber der in der Fig. 1 gezeigten Position versetzt angeordnet (z.B. Hall-Element 21 auf einer radialen Linie bei α=135° und Hall-Element 22 auf einer radialen Linie bei α=45°) und sind bevorzugt identisch ausgestaltet.

Anstelle eines Hall-Elements kann auch ein anderes Meßelement verwendet werden, das die Richtung eines das Meßelement durchsetzenden magnetischen Flusses bestimmen kann, z.B. auch geeignete Meßelemente mit magnetoresistiven Elementen. Das Meßelement kann auch an anderen als den in den Figuren gezeigten Positionen angeordnet sein, sofern dort auch die Richtung des Magnetfeldes bestimmt werden kann.

## Patentansprüche

1. Winkelsensor mit einem Magnetfeldsensorelement (1) zur Messung eines von der Winkelposition (a) eines relativ zum Winkelsensor um eine Drehachse (5) drehbaren, mit einem Magneten (4) versehenen Meßobjekts (6) abhängigen Sensorsignals (U_{S}), worin ein Meßelement (2) zur Ermittlung eines von der Richtung des das Meßelement (2) durchsetzenden Magnetfeldes (7) abhängigen Richtungssignals (U_{R21}) und eine Auswerteschaltung (9) zur Bestimmung der Winkelposition (α) aus dem Sensorsignal (U_{S}) vorgesehen sind,
**dadurch gekennzeichnet, daß** mindestens ein weiteres Meßelement (22) vorgesehen ist zur Bestimmung mindestens eines weiteren von der Richtung des das Meßelement (22) durchsetzenden Magnetfeldes (7) abhängigen Richtungssignals (U_{R22}) und daß die Auswerteschaltung (9) zur Bestimmung der Winkelposition (α) aus zusätzlich den Richtungssignalen (U_{R24}, U_{R22}) vorgesehen ist.

2. Winkelsensor nach Anspruch 1,
**dadurch gekennzeichnet, daß** die Meßelemente (21, 22) auf unterschiedlichen, von der Drehachse (5) des Meßobjekts (6) radialen Linien (18,19), insbesondere auf um 90° zueinander versetzten Linien angeordnet sind.

3. Winkelsensor nach Anspruch 1,
**dadurch gekennzeichnet, daß** das Magnetfeldsensorelement (1) ein aus mehreren, insbesondere zu einer oder mehreren Meßbrücken (11,12) verschalteten, magnetoresistiven Elementen (13) aufgebauter MR-Sensor ist.

4. Winkelsensor nach Anspruch 1,
**dadurch gekennzeichnet, daß** das Magnetfeldsensorelement (1) zwei um 45° zueinander verdreht angeordnete Meßbrücken (11,12) aufweist.

5. Winkelsensor nach Anspruch 1,
**dadurch gekennzeichnet, daß** die Meßelemente (21, 22) Hall-Elemente oder magnetoresistive Elemente enthaltende MR-Sensoren sind.

6. Winkelsensor nach Anspruch 1,
**dadurch gekennzeichnet, daß** die Meßelemente (21, 22) derart angeordnet sind, daß sie im wesentlichen von einem parallel zur Drehachse (5) des Meßobjekts (6) verlaufenden Magnetfeld (7) durchsetzt sind, insbesondere daß die Meßelemente (21, 22) neben der Drehachse (6) angeordnet sind.

7. Winkelsensor nach Anspruch 1,
**dadurch gekennzeichnet, daß** die Meßelemente (21, 22) und die Auswerteschaltung (9) ein gemeinsames Bauelement (10) bilden.

8. Winkelsensor nach Anspruch 1,
**dadurch gekennzeichnet, daß** die Auswerteschaltung (9) derart ausgestaltet ist, daß anhand der Richtungssignale (U_{R21}, U_{R22}) der Winkelmeßbereich bestimmt wird, in dem das gemessene Sensorsignal (U_{S}) liegt, und daß danach anhand des Sensorsignals (U_{S}) die Winkelposition (α) in diesem Winkelmeßbereich bestimmt wird.

9. Stellungsgeber, insbesondere Lenkwinkelstellungsgeber in einem Fahrzeug oder Nockwellenstellungsgeber in einem Fahrzeugmotor, mit einem Winkelsensor nach Anspruch 1.

10. Fahrzeug mit einem Stellungsgeber nach Anspruch 9.

## Claims

1. An angle sensor which includes a magnetic field sensor element (1) for measuring a sensor signal (U_{S}) which is dependent on the angular position (α) of a measuring object (6) which is rotatable about an axis of rotation (5) relative to the angle sensor and is provided with a magnet (4), in which a measuring element (2) is provided for determining a direction signal (U_{R21}) which is dependent on the direction of magnetic field (7) traversing the measuring element (2) and an evaluation circuit (9) for determining the angular position (α) from the sensor signal U_{S}, **characterized in that** at least a further measuring element (22) is provided for determining at least a further direction signal (U_{R22}) which is dependent on the direction of the magnetic field (7) traversing the measuring element (22), and **in that** the evaluation circuit (9) is provided for determining the angular position (α) additionally from the direction signals (U_{R21}, U_{R22}).

2. An angle sensor as claimed in claim 1, **characterized in that** the measuring elements (21, 22) are arranged on different radial lines (18, 19) starting from the axis of rotation (5) of the measuring object (6), more particularly on lines which are offset by 90° relative to each other.

3. An angle sensor as claimed in claim 1, **characterized in that** the magnetic field sensor element (1) is an MR sensor comprising a plurality of magnetoresistive elements (13) configured to one or more measuring bridges (11, 12).

4. An angle sensor as claimed in claim 1, **characterized in that** the magnetic field sensor element (1) has two measuring bridges (11, 12) arranged turned through 45° to each other.

5. An angle sensor as claimed in claim 1, **characterized in that** the measuring elements (21, 22) are Hall elements or MR sensors which include magnetoresistive elements.

6. An angle sensor as claimed in claim 1, **characterized in that** the measuring elements (21, 22) are arranged in such manner that they are essentially traversed by a magnetic field (7) extending parallel to the axis of rotation (5) of the measuring object (6), more particularly that the measuring elements (21, 22) are arranged adjacent the axis of rotation (6).

7. An angle sensor as claimed in claim 1, **characterized in that** the measuring elements (21, 22) and the evaluation circuit (9) form a common component (10).

8. An angle sensor as claimed in claim 1, **characterized in that** the evaluation circuit (9) is arranged such that the angle measuring range in which the measured sensor signal (U_{S}) is located is determined by means of the direction signals (U_{R21}, U_{R22}) and **in that** subsequently the angular position (α) in this angle measuring range is determined by means of the sensor signal (U_{S}).

9. A position sensor, notably a steering angle sensor in a vehicle or a cam shaft position sensor in a vehicle engine, provided with an angle sensor as claimed in Claim 1.

10. A vehicle which includes a position sensor as claimed in claim 10.

## Revendications

1. Capteur d'angle avec un élément capteur de champ magnétique (1) pour la mesure d'un signal de capteur (U_{S}) dépendant de la position angulaire (α) d'un objet de mesure (6) doté d'un aimant (4) et rotatif autour d'un axe de rotation (5) par rapport au capteur d'angle dans lequel sont prévus un élément de mesure (2) pour la détermination d'un signal de direction (U_{R24}) dépendant de la direction du champ magnétique (7) traversant l'élément de mesure (2) et un circuit d'évaluation (9) pour la détermination de la position angulaire (α) à partir du signal de capteur (U_{S}), **caractérisé en ce qu'**il est prévu au moins un élément de mesure (22) supplémentaire pour la détermination d'au moins un signal de direction (U_{R22}) supplémentaire dépendant de la direction du champ magnétique (7) traversant l'élément de mesure (22) et que le circuit d'évaluation (9) est prévu pour la détermination de la position angulaire (a) à partir, en plus, des signaux de direction (U_{R24}, U_{R22}).

2. Capteur d'angle selon la revendication 1, **caractérisé en ce que** les éléments de mesure (21, 22) sont disposés sur différentes lignes radiales (18, 19) par rapport à l'axe de rotation (5) de l'objet de mesure (6), en particulier sur des lignes décalées de 90° l'une par rapport à l'autre.

3. Capteur d'angle selon la revendication 1, **caractérisé en ce que** l'élément capteur de champ magnétique (1) est un capteur MR composé d'éléments magnétorésistifs (13) montés en particulier en un ou plusieurs ponts de mesure (11, 12).

4. Capteur d'angle selon la revendication 1, **caractérisé en ce que** l'élément capteur de champ magnétique (1) présente deux ponts de mesure (11, 12) disposés en décalage de 45° l'un par rapport à l'autre.

5. Capteur d'angle selon la revendication 1, **caractérisé en ce que** les éléments de mesure (21, 22) sont des capteurs MR contenant des éléments de Hall ou des éléments magnétorésistifs.

6. Capteur d'angle selon la revendication 1, **caractérisé en ce que** les éléments de mesure (21, 22) sont disposés de telle sorte qu'ils sont traversés essentiellement par un champ magnétique (7) s'étendant parallèlement à l'axe de rotation (5) de l'objet de mesure (6), en particulier que les éléments de mesure (21, 22) sont disposés à côté de l'axe de rotation (6).

7. Capteur d'angle selon la revendication 1, **caractérisé en ce que** les éléments de mesure (21, 22) et le circuit d'évaluation (9) forment un composant commun (10).

8. Capteur angulaire selon la revendication 1, **caractérisé en ce que** le circuit d'évaluation (9) est conçu de telle sorte que la plage de mesure angulaire dans laquelle se trouve le signal de capteur (U_{S}) mesuré est déterminée à l'aide des signaux de direction (U_{R21}, U_{R22}) et qu'ensuite, la position angulaire (α) dans cette plage de mesure angulaire est déterminée à l'aide du signal de capteur (U_{S}).

9. Capteur de position, en particulier capteur de position angulaire de braquage dans un véhicule ou un capteur de position d'arbre à came dans un moteur de véhicule avec un capteur angulaire selon la revendication 1.

10. Véhicule avec un capteur de position selon la revendication 9.
